Europäisches Patentamt

(19) European Patent Office

Office européen des brevets

(11) Publication number: **0 029 817**
**B1**

# (12) EUROPEAN PATENT SPECIFICATION

(45) Date of publication of patent specification: **07.11.84**

(21) Application number: **80850174.6**

(22) Date of filing: **21.11.80**

(51) Int. Cl.³: **B 65 G 65/00, B 65 G 67/02, B 65 G 67/20**

(54) Method and device for loading freight units in a freight container.

(30) Priority: **22.11.79 SE 7909664**

(43) Date of publication of application:
**03.06.81 Bulletin 81/22**

(45) Publication of the grant of the patent:
**07.11.84 Bulletin 84/45**

(84) Designated Contracting States:
**BE DE FR GB IT**

(56) References cited:
DE-A-2 043 915
DE-A-2 636 287
DE-A-2 802 345
DE-U-7 516 654
FR-A-1 602 681
FR-A-2 396 711
GB-A- 779 090
US-A-3 819 068
US-A-3 853 230

(73) Proprietor: **AB VOLVO**
**Torslanda**
**S-405 08 Göteborg (SE)**

(72) Inventor: **Persson, Christer Ake Lennart**
**Kalls väg 4**
**S-290 60 Kyrkhult (SE)**
Inventor: **Hultberg, Bo Christer Jimmy**
**Algvägen 9**
**S-360 10 Ryd (SE)**
Inventor: **Nilsson, Bengt Göran**
**Lundbergs väg 9**
**S-290 40 Näsum (SE)**
Inventor: **Westerberg, Sune Martin**
**Klarbärsvägen 5**
**S-293 00 Olofström (SE)**

(74) Representative: **Kierkegaard, Lars-Olov et al**
**H. ALBIHNS PATENTBYRA AB Box 7664**
**S-103 94 Stockholm (SE)**

## Description

For simultaneous transport of a multitude of goods it is known to use large freight container. The volume therein can be used most effectively if the goods are arranged in freight units of one or a few uniform sizes. These freight units can be combined to completely fill the container. Such a method is used, for example, for transporting car body parts between a stamping shop and an assembly plant. Racks are used for this purpose, consisting of a base in the form of a cargo pallet of steel profiles and an upper portion in which the various body portions can be placed. The height of the freight unit corresponds to the free, inner height in the container and its length corresponds to the inner width of the container. The freight units can have various standard widths. Such freight units, when filled with sheet metal parts, are relatively large and of considerable weight. If they are moved with a conventional fork-lift truck, for example, which is driven into the container, the floor of the container is subjected to a heavy load for which it is not designed. It has been found that with this method of loading the life of the containers is very short.

Loading devices utilizing a boom or similar, which is extendable in cantilever fashion without touching the floor of the loading area, are known from, for example, FR—A—1602681, FR—A1—2396711, GB—A—779090 and US—A—3819068. Such a device could be used for loading and unloading containers with freight units of the above-mentioned type, and the purpose of the invention is to provide a loading method and to develop such a boom loading device in a manner to make possible automatic loading and unloading of the container. No loading device capable of automatic operation has been described in the above-mentioned patent publications, although FR—A—1602681 mentions the possibility thereof by providing the boom-like element with longitudinal and vertical sensors.

Thus the invention sets out from a method according to the preamble of the accompanying claim 1 and a device according to the preamble of the accompanying claim 1, and the purpose of the invention is obtained with a method having the characteristics of claim 1 and the characterizing features of claim 4.

Strain on the container floor is avoided completely by having the freight units carried by a boom which can be inserted cantilevered into the container to set down or pick up freight units. In order for the boom to stop at the correct positions for picking up and leaving off freight units, stopping and optional speed reduction of the boom movement is controlled according to the invention, firstly when the boom is advanced with empty carrying means towards a freight unit by sensing the relative position of the carrying means and the freight unit, secondly when the boom with its lifted load is inserted into the container by the load striking a stop in the container or a load set down previously, and thirdly for other boom movement by sensing of the position of the boom in relation to a fixed point.

Further embodiments of the invention and advantages thereof will become apparent from the sub-claims and the following detailed description of one embodiment. Reference is made to the accompanying drawings, of which Fig. 1 shows from above and Fig. 2 shows from the side an installation for loading and unloading freight units into and out of a container. Figs. 3 and 4 show from the side and from above a loading boom in the installation, shown in a larger scale. Figs. 5 and 6 show in still larger scales the front end of the loading boom as seen from the side and from above respectively.

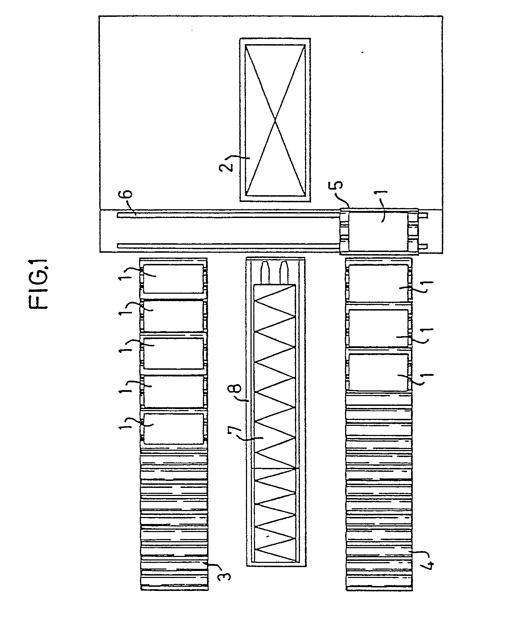

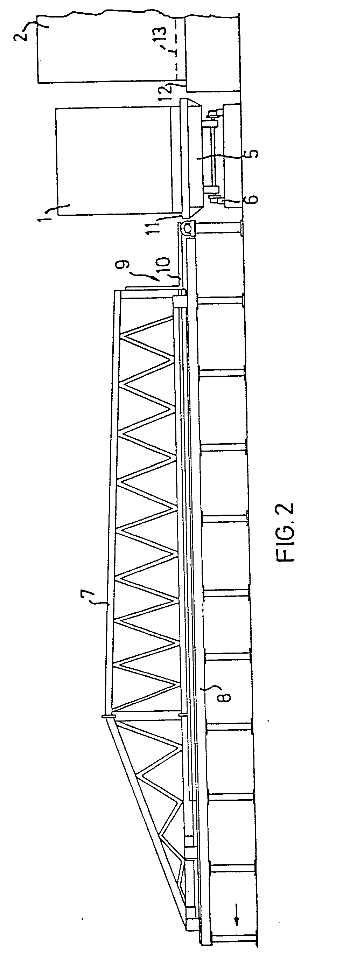

The installation is intended for loading and unloading of freight units in the form of cargo pallets 1 with a fixed upper portion which forms a rack for sheet metal parts, for example. The pallets 1 are to be loaded onto or unloaded from a freight container 2 in the form of a large box which is completely closed except at one end where there are doors which open. The height of each pallet 1 including the upper portion corresponds to the free inner height in the container 2. The length of each pallet 1, i.e. the greatest dimension in the horizontal plane, corresponds to the inner free width of the container 2. The width of each pallet 1 is one of a small number of predetermined widths so chosen that a given number of pallets arranged in close contact will completely fill the length of the container 2. Fig. 1 shows from above a roller conveyor 3 carrying five pallets 1. The width of each pallet is such that together they fill a container 2. Another roller conveyor 4 is shown at the bottom of Fig. 1, carrying three wider pallets 1. In front of the roller conveyors 3, 4 and perpendicular to their longitudinal direction, there is a transport cart 5 which moves on rails 6. A fourth pallet 1 of the same width as those on roller conveyor 4 is shown on the cart 5 in Figs. 1 and 2. The width of these wider pallets 1 is selected so that four pallets completely fill the container 2.

The loading installation shown in Figs. 1 and 2 comprises, in addition to the parallel roller conveyors 3 and 4, a loading boom 7 arranged between whem which is reciprocably movable parallel to the roller conveyors 3, 4 in a fixed boom frame 8. The transport cart 5 can be stopped directly in front of the boom frame 8 in a position which is called the loading station below. On the opposite side of the loading station from the boom frame 8, a freight container 2 is arranged directly in front of the loading boom 7 with its long sides parallel to the same. The forward end of the loading boom, as shown to the right in the figure, is provided with a fork-lift attachment 9 which is described in more detail below. Fig. 2 shows the fork 10 of the lifting attachment in its lowered position, and as can be seen, the fork lies somewhat higher than the loading plane 11 of the transport cart 5. Said plane 11 is formed of motor-driven conveyor rollers (not shown in detail here) arranged parallel to the conveyor rollers (also motor-driven) of the conveyors 3, 4. The container 2 is placed on a floor level 12 such that the interior bottom of the container, indicated by the numeral 13, is at essentially the same level as the loading plane 11 of the cart 5. The bottom 13, the floor 12 and the loading plane 11 are all horizontal.

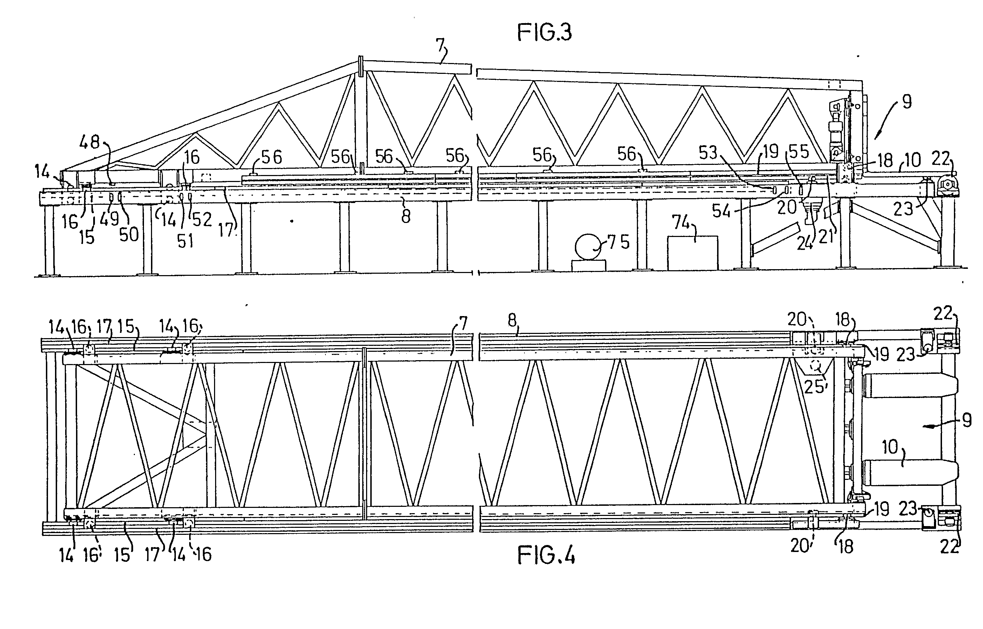

Figs. 3 and 4 shows in a larger scale the loading boom 7 and the boom frame 8. The boom 7 is made as a lattice beam which, with the aid of running wheels and guide rails, can move back and forth in the longitudinal direction of the frame 8. At its rear end, at the left-hand end in the drawing, the boom 7 carries on either side two vertically arranged wheel pairs 14. The two wheels in each pair 14 are in contact with the upper and lower sides, respectively, of a guide rail 15 fixed in the frame 8. The rear end of the boom 7 is guided laterally by four wheels 16 arranged two on either side of the boom 7. On either side of the boom the wheels 16 contact from the inside a guide rail 17 fixed in the frame 8. The front end of the boom 7 is supported on either side by a vertical wheel pair 18 fixed in the frame 8, said wheels being in contact with the upper and lower sides, respectively, of a guide rail 19 fixed in the boom. Laterally, the front end of the boom is controlled with the aid of wheels 20 fixed in the frame 8, which are arranged on either side of the boom 7 and contact the outsides of guide rails 21 on the boom. The figures show the boom 7 in its left-hand end position, which corresponds to the rear end position of the boom. At the front end of the boom, the tips of the fork 10 just reach the front end of the frame 8. The frame 8 is provided at this location on either side with an additional carrying wheel 22 on which the guide rails 19 can rest when the boom 7 is extended forward. In a corresponding manner, the frame 8 has at its front end on either side a guide wheel 23 arranged to interact with the guide rails 21 when the boom 7 is moved forward.

The longitudinal movement of the boom 7 is achieved with the aid of a hydraulic motor 24 which is mounted in the frame 8 near its front end. The motor 24 drives a pinion 25 with a vertical axis, said pinion engaging a rack, not shown in detail here, mounted on the inside of the left-hand guide rail 21.

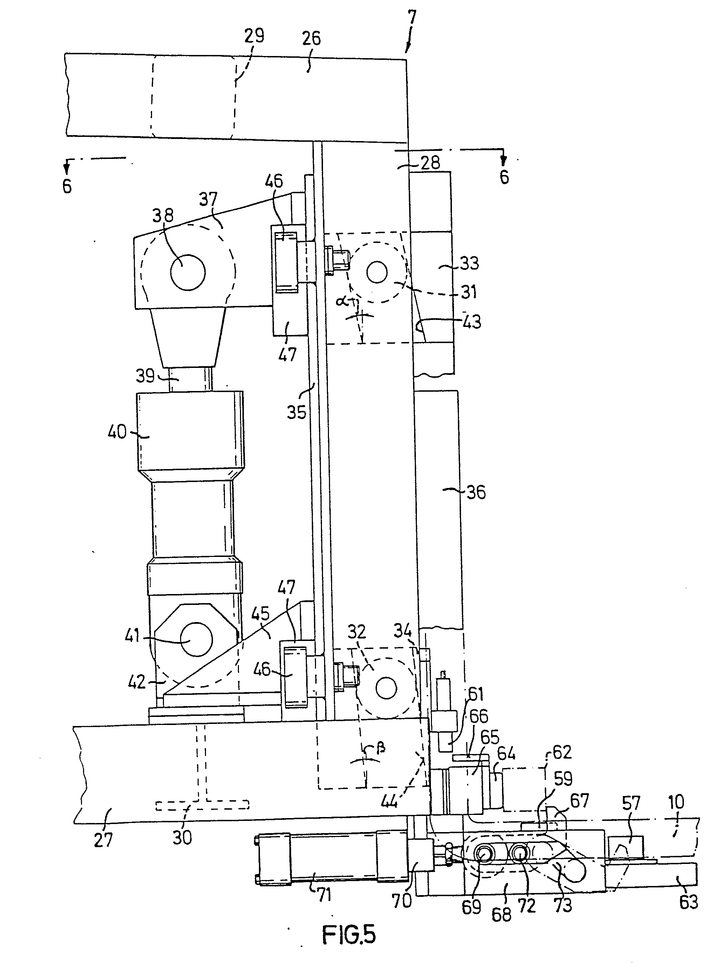

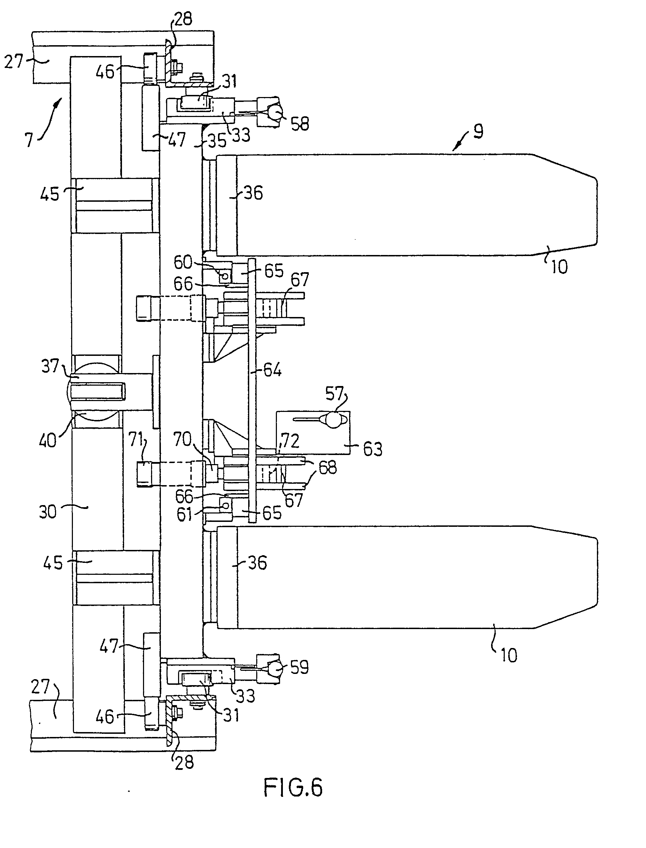

Figs. 5 and 6 show in a larger scale the front end of the boom 7 with the fork-lift attachment 9, as seen from the side and from above, respectively, along the line 6—6 in Fig. 5. The upper and lower longitudinal beams 26 and 27, respectively, of the boom 7 are joined on either side by the boom by means of a vertical post 28 in the form of an angle iron. The upper beams 26 are joined to each other by a transverse box girder 29, and the lower beams 27 are joined to each other by a transverse H-beam 30 a short distance behind the posts 28.

On their sides facing each other, the posts 28 each carry an upper and a lower guide roller 31, 32 with horizontal axes directed transversely across the longitudinal direction of the boom 7. The rollers 31, 32 are intended to guide brackets 33, 34 arranged at the top and at the bottom of the vertical edges of a rectangular plate 35 arranged vertically transversely between the posts 28. The plate 35 carries the vertical legs 36 of the fork 10. On its rear side the plate 35 carries at the top a central, rearwardly extending bracket 37 which supports a transverse, horizontal shaft 38. A piston rod 39 of a hydraulic cylinder 40 is journalled thereon, the lower end of said cylinder being swingably journalled on a shaft 41 which is carried by an attachment member 42 resting on the H-beam 30. Fig. 5 shows the plate 35 and the fork 10 in the bottom position. With the aid of the cylinder 40. The piston rod 39 can be extended upwards thus lifting the plate 35. The guide slots 43 and 44, respectively, in the guide brackets 33 and 34, respectively, run on the rollers 31 and 32, respectively. As can be seen in Fig. 5, the guide slots 43, 44 are inclined backwards, the angle of incline $\alpha$ of the upper guide slots 43 is greater than the angle of incline $\beta$ of the lower guide slots 44. Thus, when the plate 35 is lifted it will at the same time be tipped backwards so that the lifting fork 10 is also tipped backwards during the lifting movement. The plate 35 is also provided at the bottom of its rear side with two brackets 45 which, when the plate 35 is in its lower position, are in contact with the top of the H-beam 30.

Laterally the plate 35 with the fork 10 is guided with the aid of rollers 46 arranged at the top and at the bottom of the laterally directed flanges of the posts 28. Straight edge guides 47, which are fixed to the plate 35 behind the drive brackets 33 and 34, respectively, are in contact with the rollers 46.

The installation described above can be used in the following manner.

An empty container 2 is placed in the position shown in Fig. 1. By means of the roller conveyor 4 and the motor-driven rollers on the transport cart 5, a loaded pallet 1 is moved to the position shown in Fig. 1 on the cart 5. The cart is then moved on the rails 6 to the loading station directly in front of the container 2. The hydraulic motor 24 is filled with pressure oil thus moving the loading boom 7 forward from the position shown in Figs. 1 and 2. The fork 10 slips into the space intended for it in the pallet 1. The boom 7 runs out on and is supported by the carrying wheels 22. The boom 7 stops when the fork 10 has been inserted, and the fork 10 is then lifted with the aid of the piston 40. The underside of the pallet 1 will thereby be at a higher level than the bottom 13 of the container 2. The boom 7 is advanced further, with its front portion being cantilevered out over the cart 5 without resting on the same. The pallet 1 is transported in this manner into the container 2 without the pallet 1 or any portion of the boom 7 touching the floor 13, the sides or the ceiling of the container. When the pallet 1 has been inserted to the intended position in the container 2, the boom 7 stops and the pallet 1 is put down on the floor 13. The hydraulic motor 24 is reversed, and the boom 7 is drawn back to the position shown in the drawing. During this time the cart 5 can have returned to the roller conveyor 4 and have been loaded with another pallet 1 which can now be moved forward to the loading station, and the loading sequence with the boom 7 is then repeated.

During its movement between the loading station and the container, the forward portion of the loading boom 7 is cantilevered. At the front of the frame 8, the boom 7 is supported by the heavily dimensioned supporting wheels 22. The rear end of the boom 7 is prevented in this cantilevered position from tipping upward by the lower wheels in the wheel pairs 14 which are in contact with the guide rails 15 from below.

In a preferred embodiment of the loading device, the movements of the boom 7 are controlled automatically for loading and unloading. For this purpose the device is provided with boom-sensing means which sense the position of the boom 7 in relation to the frame 8, and pallet-sensing means which sense the distance between a pallet 1 and the front end of the boom 7. The boom-sensing means comprise a flag 48 at the rear end of the boom 7 on the side, which can be sensed by six sensors 49—54 fixed to the frame. These sensors are arranged in three groups, the rear group of sensors 49, 50 being used to stop the boom 7 in its rear end position as shown in the drawings. The middle group of sensors 51, 52 is arranged in front of the first group of sensors 49, 50 at a distance corresponding to the movement of the boom 7 from the rest position shown up to the loading station. The third group of sensors 53, 54 is arranged at the front of the frame and is used to determine the end position of the boom when the container 2 is empty.

The boom-sensor means also comprise a seventh sensor 55 arranged in front of the sensor 54. The sensor 55 is designed to interact with a number of flags 56 arranged on the boom 7 in positions which are determined by the various possible widths of the pallets 1. With the aid of the sensor 55 and the flags 56, the movement of the boom during loading can be slowed when the pallet carried by the boom approaches the position where it is to be placed in the container 2.

The pallet-sensor means comprise five electromagnetic sensors 57—61 which are carried by the lift-fork plate 35 at the front end of the boom 7. The sensors are intended to sense the presence of an iron beam 62, indicated with dash-dot lines in Fig. 5, which extends along the long side of each pallet 1. As can be seen from Figs. 5 and 6, a first pallet sensor 57 is mounted on a bracket 63 fixed to the fork-plate 35 in such a manner that the sensor 57 lies approximately midway between the horizontal fork tines 10 at a level somewhat below their lifting plane. When the fork 10 is inserted under a pallet, the sensor 57 will send a signal when the beam 62 of the pallet 1 passes over the sensor 57. Two additional sensors 58, 59 are carried by the lower guide brackets 34 at the side edges of the fork plate 35. The sensors 58, 59 are both at the same distance in front of the fork plate 35, which distance is less than the distance of the sensor 57 from the fork plate 35. The sensors 58, 59 also lie under the lifting plane of the fork 10, but somewhat closer to the same than the sensor 57, and are disposed to sense the beam 62 of the pallet. At a still shorter distance in front of the fork plate 35, but still spaced in front of the vertical legs 36 of the fork, there is a horizontal, transverse stop beam 64. The beam 64 extends laterally between the fork legs 36 and is placed at a level somewhat above the lifting plane of the fork 10. The beam 64 is supported by two compression spring members 65, rubber springs for example, elongated in the longitudinal direction of the loading boom 7. The rear ends of the spring 65 are fixed to the fork plate 35 and their front ends support the beam 64 at either end of the same. At either end of the beam there is also fixed an upwardly and rearwardly arranged angle plate 66, the upper horizontal leg of which, in position shown in Figs. 5 and 6, extends at a level below and rearwards but not in under an associated sensor 60 or 61 fixed to the fork plate 35. When the springs 65 are compressed, the angle plates 66 are pushed in under the sensors 60, 61 which then send a signal. This compression of the springs 65 occurs when a pallet 1, abutting against the beam 64, during the forward movement of the loading boom 7 strikes the far end wall of the container 2 or a pallet previously placed in the container 2.

The sensors 58, 59 can be used to sense whether the pallet under which the fork is inserted is parallel to the fork plate 35 or at an angle thereto. If only one of the sensors 58, 59 emits a signal, the pallet 1 is at an angle. It can then be pulled to the correct position by positioning arms carried by the fork plate 35. These arms are made as hooks 67. Each hook 67 is guided between two vertical bracket plates 68 arranged in the longitudinal direction of the loading boom 7. The rear end of the hook 67 is pivotally joined to the piston rod 70 of a hydraulic cylinder 71 via a horizontal, transverse shaft 69. Between its rear end and its forward end provided with the upwardly directed abutment, each hook 67 is also provided with a transverse, horizontal guide pin 72. The guide pin 72 and the axially elongated shaft 69 run in guide grooves 73 in the bracket plates 68. The guide grooves extend from their rear ends first horizontally forwards and then inclined downwards and forwards. In the forwardly extended position of the hook 67, the hook is then inclined forwards and downwards so that its upwardly directed abutment lies under the lifting plane of the horizontal fork 10. When the piston rod 70 is pulled into the cylinder 71, the hook 67 is pulled backwards, whereby the guide pin 72 moves up to and into the horizontal portion of the groove 73 so that the upright abutment of the hook will come above the lifting plane of the fork 10 and into contact with the back of the transverse beam 62 of the pallet. As the piston rod 70 is pulled in further it will also pull the beam 62 and the pallet backwards until it is parallel to the fork plate 35 with the beam 62 in contact with the stop beam 64.

All of the sensors, both the boom sensors 49—55 and the pallet sensors 57—61, are connected in a way not shown in more detail with an electrical and hydraulic control apparatus 74, which is shown in Fig. 3 arranged beneath the boom frame 8. To the control apparatus 74 there are also connected the hydraulic motor 24 for driving the boom 7, the hydraulic cylinder 40 for lifting the fork plate 35, the hydraulic cylinder 71 for positioning the hooks 67 and a hydraulic pump 75 shown in Fig. 3. Starting from the position shown in Figs. 1 and 2, loading of an empty container 2 proceeds in the following manner. The operator sets the control apparatus 74 for the widths of the freight units 1 which are on the roller conveyor 4 and are to be loaded into the container 2. The operator then starts an automatic process which begins with the transport cart 5, with the pallet 1 resting thereon, being advanced to the loading station directly in front of the loading boom 7, where it stops. The control apparatus 74 now starts the hydraulic motor 24, which advances the loading boom 7 at a relatively high normal speed. The fork 10 is in the lowered position and is inserted under the pallet 1 on the cart 5. The sensor 57 senses the beam 62 of the pallet and in response to this signal the control apparatus 74 shifts the hydraulic motor 24 to a lower speed, so that the boom 7 inches forward. When either of the sensors 58, 59 emits a signal, the hydraulic motor 24 and the boom 7 stops, whereafter the hydraulic cylinders 71 are pressurized so that the piston rods 70 are pulled in and the hooks 67 pull the pallet backwards. When both of the sensors 58, 59 emit signals, the pallet 1 has assumed the correct position. The control apparatus 74 then supplies pressure medium to the hydraulic cylinder 40, whereby the fork plate 35 is lifted and tilted backwards at the same time. The hydraulic motor 24 is then started again to advance the loading boom 7 at normal speed.

The sensor 55 is connected to a pulse coder in the control apparatus 74 and counts the number of flags 56 which pass over the sensor 55. In accordance with the pallet width setting of the control apparatus 74 made by the operator, the boom movement will continue until the appropriate flag 56 causes the sensor to send a signal to the control apparatus 74, whereby the speed is reduced to inching. All this time the loading boom 7 and the fork-lift attachment 9 are held lifted above the floor of the container. The pallet now approaches the rear, closed end of the container. Finally the pallet strikes the end wall, and its movement is halted. Via the stop beam 64, one or both of the sensors 60, 61 is triggered, thus halting the boom 7. The fork is lowered, the positioning hooks 67 are moved forwards so that they release the pallet, whereafter the boom 7 is pulled backwards by reversing the hydraulic motor 24. Even during the return movement with the fork lowered, the boom 7 and the fork-lift attachment pass freely over the floor of the container. The boom 7 is now drawn back at normal speed until the sensor 50 senses the flag 48. This causes the control apparatus 74 to shift the hydraulic motor 24 to lower speed in reverse so that the boom 7 inches backwards. When the sensor 49 senses the flag 48, the boom 7 is halted.

During the loading movement when the boom 7 was inserted into the container 2, the transport cart 5 was moved back to its position in front of the roller conveyor 4 and a new pallet 1 was rolled onto the cart 5. The cart 5 is now moved with the new pallet up to the loading station, and the loading boom 7 then advances, lifts the new pallet and carries it into the container in the manner described above. The advancing movement of the boom 7 is now slowed down to inching with the aid of a flag 56 located further forward than that used for the first pallet. The second pallet will now not strike the end wall of the container but rather the first pallet which has already been loaded. The result is however the same: the rubber springs 65 are compressed so that the sensors 60, 61 send a signal to the control apparatus 74 which stops the loading boom 7 and sets down the second pallet. By virtue of the fact that it is advanced to abutment with the first pallet, the pallets will stand in close contact without any dead space in the container. The risk of dead space is further reduced by the fact that the pallet, when carried by the fork, is inclined somewhat backwards when it strikes the previously loaded pallet. This prevents forwardly tilting pallets which could be set down at a distance from a previously loaded pallet. After the second pallet has been set down, the boom 7 is retracted to its rear position, and the transport cart 5 advanced a third pallet, and the sequence is repeated for this pallet and for the fourth pallet on the conveyor 4. Different flags 56 are used to slow down the boom movement to inching speed just before the lifted pallet strikes the previously loaded pallet. The flags 56 can be placed in such positions that the operator can program the control apparatus 74 for loading the container 2 with pallets 1 of various predetermined widths. It is thus possible to load the container 2 automatically with pallets of the same or different widths.

If desired it is possible with the aid of the loading boom 7 to check that the container 2 is actually empty before the loading sequence is initiated. For this purpose the loading boom 7 is inserted with an empty fork 10 into the container. If there is a pallet in the container, this is sensed by the sensor 57, and it can be lifted out if so desired. If there is no pallet in the container, the flag 48 will pass over the sensor 53, thus making the boom inch forward. The flag 48 then reaches the sensor 54, whereupon the boom 7 is halted and then retracted to its rear end position.

Unloading of a loaded container proceeds in the following manner. The operator sets the control apparatus for unloading, whereupon the boom 7 is extended forwards from its rear position at normal speed. The boom 7 passes over the empty loading station, and the fork 10 extends into the container 2. When the sensor 57 senses a pallet 1, the control apparatus 74 shifts the boom movement to inching. When either of the sensors 58, 59 senses the beam 62 of the pallet, the boom movement is halted. With the aid of the positioning hooks 67, the pallet is pulled into parallel position, which is indicated by both of the sensors 58, 59 giving off signals. The fork 10 can now be lifted, whereafter the boom 7 is pulled backwards out of the container 2. The hooks 67 hold the pallet 1 on the fork 10. When the flag 48 passes over the sensor 52, the control apparatus 74 shifts down the hydraulic motor 24 to inching speed for the boom 7. When the sensor 51 senses the flag 48, the boom 7 stops. The fork-lift attachment 9 is at this point over the loading station where the empty cart 5 now stands. Under the control of the control apparatus 74 the fork 10 is lowered, the positioning hooks 67 are moved forward and released, and the boom 7 is drawn back to its rear position where it is slowed and finally stopped with the aid of sensors 50 and 49, respectively. The cart 5 is now driven to the roller conveyor 3 and the pallet is transferred to the same. Both the cart 5 and its conveyor rollers as well as the roller conveyors 3 and 4 are suitably controlled both for unloading and loading with the aid of the control apparatus 74. When the cart 5 has left the loading station, the boom 7 can again be advanced into the container 2, where the next pallet is sensed by the sensor 57 and a new pick-up sequence is carried out analogous with that described above.

There has been described above an installation for loading of a special type of covered pallets into an enclosed container. The floor, walls and ceiling of the container can be protected against contact during the loading and unloading processes by the fact that the fork boom can steer the movements of the goods with great precision laterally as well as longitudinally. The installation can also be used for other freight units than those described, for example boxes or conventional pallets with or without shrink film-packaged goods. The container can also be one without a roof or walls, for example an open flat-bed. If the container is arranged movable laterally and/or vertically during the loading and unloading operations, it is also possible to arrange the freight units beside each other or stacked vertically in the container. The movements of the container can also be controlled by the control apparatus 74, coordinating them with the movements of the boom 7 and the cart 7.

## Claims

1. A method of loading freight units of one or a few uniform sizes into a freight container, wherein the container (2) is arranged in a predetermined position with an open side facing a loading station, a freight unit (1) is conveyed to the loading station; an essentially horizontal boom (7) situated on the side of the loading station opposite the container (2) is displaced in its longitudinal direction from a retracted starting position up to the freight unit; the freight unit (1) is grasped with the aid of freight carrying means (9) arranged on the boom (7) and by means of lifting means (9) is held at a level higher than the bottom (13) of the container (2); the boom (7) is further displaced in its longitudinal direction cantilevered over the loading station so that the freight unit (1) is moved from the same into the container (2); the freight unit (1) is lowered and set down in the container (2) at an intended location; the boom (7) is retracted from the container (2) past the loading station to its original position; whereafter a second freight unit (1) is conveyed to the loading station; and the boom (7) is again moved forward and the loading sequence is repeated for this second and possibly additional freight units (1) until the intended number of the same have been loaded into the container (2); characterized in that when the boom (7) is advanced with empty carrying means (9) towards a freight unit (1), stopping and optional speed reduction of the boom movement are controlled by sensing of the distance between the carrying means (9) and the freight unit (1) with the aid of freight-sensing means (57—61) carried by the boom (7); that sensing of the longitudinal position of the boom (7) is performed during movement of the boom by sensing means (57—61; 48, 56) movable with the boom; and that when loading a freight unit (1) into the container (2), the boom (7) is moved forward until the freight unit (1) carried thereby comes into contact with an end abutment in the container (2) or with the immediately previously loaded freight unit (1) in the container; that the boom movement is continued after said contact is established until force sensing means (60, 61, 64, 65) carried by the boom sense a force of predetermined magnitude opposing the boom movement, and that the boom movement is then stopped, the freight unit is set down in the container and the boom is withdrawn.

2. A method as claimed in claim 1, characterized in that in the direction of boom movement proximity between the carrying means (9) and the freight unit (1) is sensed by means of freight-sensing means (58, 59) carried by the boom (7), which are also used to sense whether the freight unit (1) has assumed the predetermined orientation relative to the carrying means (9).

3. A method as claimed in claim 1 or 2, characterized in that the boom movement is normally carried out at a first, higher speed and that the boom movement is slowed to a second, lower speed shortly before the boom (7) reaches the loading station or the place for setting down the freight unit (1) in the container (2).

4. A device for loading freight units (1) of one or a few uniform sizes into a container (2) of predetermined size, arranged in a predetermined position with an open end facing a loading station; said device comprising transport means (5) disposed to transport one freight unit (1) at a time to the loading station; a boom frame (8) with a long boom (7) carried thereby and located on the opposite side of the loading station from the container (2); driving means (24) for moving the boom (7) in its longitudinal direction; freight carrying means (9) supported by the front end of the boom (7), lifting means (9) for lifting and lowering the freight unit (1) carried by the carrying means; supporting means (22) in the frame (8) disposed to support the boom (7) with its forward end cantilevered over the loading station and into the container (2), and sensing means (57, 61; 48, 56) movable with the boom (7) characterized in that the sensing means comprise freight-sensing means (57—61) carried by the boom (7) and arranged to sense the position of a freight unit (1) in relation to the carrying means (9), and boom position sensing means (48, 56) arranged movable with the boom and arranged to interact with stationary boom position sensing means (49—54, 55) to give the position of the boom (7); and in that the boom (7) further is provided with an abutment (64) for a freight unit (1) carried by the carrying means (9), and force sensing means (65, 60, 61) for sensing a predetermined force acting on the abutment (64) and opposing the boom movement, which force sensing means (65, 60, 61) upon sensing said predetermined force emit a signal to stop movement of the boom (7).

5. A device as claimed in claim 4, characterized in that compression spring means (65) are interposed between the abutment (64) and the boom (7); and that the force sensing means (60, 61) sense the position of the abutment (64) relative the boom (7) upon displacement of the abutment (64) against the spring force (65) under the influence of a force opposing the boom movement.

6. A device as claimed in claim 4 or 5, characterized in that the boom (7) carries at least two freight-sensing means (58, 59) located a short distance in front of the carrying means (9) and a laterally spaced from each other, which are disposed, when a freight unit is present, to each send a signal to a control apparatus (74) which in turn is connected to the drive means (24), the lifting means (9) and freight positioning means (67) carried by the boom (7); and that the control apparatus (74) is disposed, when there is a signal from either of the freight-sensing means (58, 59) to stop the boom-driving means (24) and to activate the freight positioning means (67), and when there are signals from both the freight-sensing means (58, 59) to actuate the lifting means (9) to lift the freight unit (1).

7. A device as claimed in any one of claims 4—6, characterized in that boom position sensing means (52/48, 55/56) intended for speed shifting are arranged fixedly connected to the frame (8) or the boom (7), respectively, in apredetermined position corresponding to the boom positions at a short distance from the loading station and from predetermined freight setdown places in the container (2); and that the boom-sensing means are connected to drive means (24) for shifting the drive means from a higher to a lower boom speed.

**Patentansprüche**

1. Verfahren zum Laden von Frachteinheiten einer oder weniger gleichförmiger Größen in einen Frachtcontainer, wobei der Container (2) in einer vorbestimmten Lage so angeordnet ist, daß eine offene Seite auf eine Ladestation gerichtet ist; indem eine Frachteinheit (1) zur Ladestation gefördert wird; ein im wesentlichen horizontaler Baum (7), welcher sich auf der Seite der Ladestation befindet, die dem Container (2) entgegengesetzt ist, in seiner Längsrichtung aus seiner zurückgezogenen Ausgangslage hinauf zu einer Frachteinheit versetzt wird; die Frachteinheit (1) mit Hilfe von am Baum (7) angebrachten Frachttragemitteln (9) ergriffen und durch Hebemittel (9) auf einem Niveau gehalten wird, welches höher ist als der Boden (13) des Bahälters (2); der Baum (7) weiter in seiner Längsrichtung so versetzt wird, daß er über die Ladestation kragt, so daß die Frachteinheit (1) von demselben in den Container (2) bewegt wird; die Frachteinheit (1) abgesenkt und in den Container (2) an einer bestimmten Stelle abgesetzt wird; der Baum (7) aus dem Container (2) hinter die Ladestation in die Ausgangsstellung zurückgezogen wird; wonach eine zweite Frachteinheit (1) in die Ladestation gefördert wird; und der Baum (7) erneut nach vorne bewegt und die Ladefolge für diese zweite und möglicherweise zusätzliche Frachteinheit (1) so lange wiederholt wird, bis die bestimmte Anzahl derselben in den Container (2) geladen worden ist, dadurch gekennzeichnet, daß, wenn der Baum (7) mit leeren Tragmitteln (10) zu einer Frachteinheit (1) vorgeschoben wird, das Anhalten und die mögliche Geschwindigkeitsreduzierung der Baumbewegung durch Abfühlen des Abstandes zwischen den Tragmitteln (10) und der Frachteinheit (11) mit Hilfe von vom Baum (7) getragenen Frachtsensormitteln (57—61) gesteuert werden; daß das Abfühlen der Längslage des Baumes (7) während der Bewegung des Baumes durch Sensormittel (57—61; 48, 46), die mit dem Baum bewegbar sind, durchgeführt wird; und daß, wenn eine Frachteinheit (1) in den Container (2) geladen wird, der Baum (7) so lange nach vorne bewegt wird, bis die davon getragene Frachteinheit (1) mit einem Endanschlag im Container (2) oder mit einer unmittelbar zuvor in den Container geladenen Frachteinheit (1) in Berührung gelangt; daß die Baumbewegung nach dem Einrichten dieses Kontaktes fortgesetzt wird, bis Kraftsensormittel (60, 61, 64, 65), die vom Baum getragen werden, eine der Baumbewegung entgegengesetzte Kraft bestimmter Größe feststellen, und daß die Baumbewegung dann angehalten, die Frachteinheit im Container abgesetzt und der Baum zurückgezogen wird.

2. Verfahren nach Anspruch 1, dadurch gekennzeichnet, daß in Richtung der Baumbewegung die Annäherung zwischen den Tragmitteln (10) und der Frachteinheit (9) von Frachtsensormitteln (58, 59), welche von Baum (7) getragen werden, abgefühlt wird, wobei diese Sensormittel ebenso dazu verwendet werden, festzustellen, ob die Frachteinheit (1) die vorbestimmte Ausrichtung relativ zu den Tragmitteln (10) eingenommen hat.

3. Verfahren nach Anspruch 1 oder 2, dadurch gekennzeichnet, daß die Baumbewegung normalerweise mit einer ersten, hüheren Geschwindigkeit durchgeführt wird, und daß die Baumbewegung dann auf eine zweite, niedrige Geschwindigkeit verlangsamt wird, kurz bevor der Baum (7) die Ladestation oder den Ort zum Absetzen der Frachteinheit (1) in den Container (2) erreicht.

4. Vorrichtung zum Laden von Frachteinheiten (1) einer oder weniger gleichförmiger Größen in einen Container (2) vorbestimmter Größe, welcher in einer vorbestimmten Stelle angeordnet ist, indem ein offenes Ende desselben auf die Ladestation gerichtet ist; wobei die Vorrichtung umfaßt; Transportmittel (5), angeordnet für den jederzeitigen Transport einer Frachteinheit (1) zur Ladestation; einen Baumrahmen (8) mit einem davon getragenen länglichen Baum (7), angeordnet an der Seite der Ladestation, die der des Containers (2) entgegengesetzt ist; Antriebsmittel (24) zum Bewegen des Baumes (7) in seine Längsrichtung; Frachttragmittel (10), die vom vorderen Ende des Baumes (7) abgestützt werden; Hebemittel (9) zum Anheben und Absenken der Frachteinheit (1), getragen durch die Tragmittel; Stützmittel (22), die innerhalb des Rahmens (8) so angeordnet sind, daß sie den Baum (7) mit seinem nach vorne über die Ladestation und den Container (2) tragenden Ende abstützen, und Sensormittel (57—61; 48, 56), welche mit dem Baum (7) bewegbar sind, dadurch gekennzeichnet, daß die Sensormittel von Baum (7) getragene Frachtsensormittel (57—61) umfassen, die so angeordnet sind, daß sie die Lage der Frachteinheit (1) relativ zu den Tragmitteln (10) feststellen und daß die Sensormittel Baumlagesensormittel (48, 56) umfassen, die mit dem Baum bewegbar und so angeordnet sind, daß sie mit stationären Baumlagesensormitteln (49—54, 55) zusammenwirken, um die Lage des Baumes (7) zu-bestimmen; und daß der Baum (7) weiterhin mit einem Anschalg (64) für eine von den Tragmitteln (10) getragene Frachteinheit (1) vorgesehen ist, und weiterhin mit Kraftsensormitteln (65, 60, 61) zum Feststellen einer vorbestimmten Kraft, welche auf den Anschalg (64) wirkt und der Baumbewegung entgegengesetzt ist, welche Kraftsensormittel (65, 60, 61) nach dem Feststellen einer vorbestimmten Kraft ein Signal zum Anhalten der Bewegung des Baumes (7) abgeben.

5. Vorrichtung nach Anspruch 4, dadurch gekennzeichnet, daß Druckfedermittel (65) zwischen dem Anschlag (64) und dem Baum (7) angeordnet sind und daß die Kraftsensormittel (60, 61) die Lage des Anschlages (64) relativ zum Baum (7) feststellen, nachdem der Anschlag (64) gegen die Federkraft (65) unter Einfluß einer Kraft, die der Baumbewegung entgegengesetzt ist, verschoben worden ist.

6. Vorrichtung nach Anspruch 4 oder 5, dadurch gekennzeichnet, daß der Baum (7) zumindest zwei Frachtsensormittel (58, 59) trägt, die in einem kurzen Abstand vor den Tragmitteln (10) angeordnet, seitlich voneinander beabstandet und so angeordnet sind, daß jedes bei Anwesenheit eines Frachtmittels an einen Steuerapparat (74) ein Signal sendet, welcher Apparat seinerseits mit den Antriebsmitteln (24), den Hebemitteln (9) und den Frachtpositiermitteln (67), welche von Baum (7) getragen werden, verbunden sind, und daß der Steuerapparat (74) so angeordnet ist, daß et bei Anwesenheit eines Signals von einer Der Frachtsensormittel (58, 59) die Baumantriebsmittel (24) anhalten und die Frachtpositioniermittel (67) aktivierten, und daß die Anwesenheit von Signalen beider Frachtsensormittel (58, 59) die Hebemittel (9) zum Anheben der Fracht (1) betätigt werden.

7. Vorrichtung nach einem der Ansprüche 4 bis 6, dadurch gekennzeichnet, daß die Baumlagensensormittel (52/48, 55/56), welche für das Geschwindigkeitsverschieben bestimmt sind, mit dem Rahmen (8) bzw. dem Baum (7) fest verbunden an vorbestimmten Stellen entsprechend den Baumlagen in einem kurzen Abstand von der Ladestation und von vorbestimmten Frachtabsetzstellen innerhalb des Containers (2) angeordnet sind; und daß die Baumsensormittel mit Antriebsmitteln (24) zum Ändern der Antriebsmittel von einer hohen zu einer niedrigen Baumgeschwindigkeit verbunden sind.

**Revendications**

1. Procédé pour charger des colis de marchandises d'une seule grandeur ou d'un petit nombre de grandeurs uniformes dans un conteneur à marchandises, suivant lequel le conteneur (2) est disposé dans une position prédéterminée avec un côté ouvert faisant face à une station de chargement; un colis (1) de marchandises est transporté jusqu'à la station de chargement; une flèche (7) sensiblement horizontale située du côté de la station de chargement opposé à celui où est disposé le conteneur (2) est déplacée dans sa direction longitudinale depuis une position de départ rétractée jusqu'au colis de marchandises; le colis (1) de marchandises est saisi à l'aide de moyens (9) de transport de marchandises disposées sur la flèche (7) et est maintenu, à l'aide de moyens de levage (9), à un niveau supérieur au plancher (13) du conteneur (2); la flèche (7) est à nouveau déplacée dans sa direction longitudinale en porte-à-faux au-dessus de la station de chargement de sortie que le colis (1) de marchandises est déplacé depuis celle-ci jusque dans le conteneur (2); le colis (1) de marchandises est abaissé et posé dans le conteneur (2) à un emplacement voulu; la flèche (7) est rétractée hors du conteneur (2) au-delà de la station de chargement jusqu'à sa position d'origine; ensuite, un second colis (1) de marchandises est transporté jusqu'à la station de chargement et la flèche (7) est à nouveau déplacée vers l'avant et la séquence de chargement est répétée pour ce second colis et éventuellement pour des colis (1) de marchandises supplémentaires jusqu'à ce que le nombre voulu de tels colis ait été chargé dans le conteneur (2); caractérisé en ce que, lorsque la flèche (7) est avancée avec le moyens transporteurs (9) en direction d'un colis (1) de marchandises, l'arrêt et une réduction facultatives de la vitesse de déplacement de la flèche sont commandés par la détection de la distance entre les moyens transporteurs (9) et le colis (1) de marchandises à l'aide de moyens (57—61) détecteurs de marchandises portés par la flèche (7); en ce qu'une détection de la position longitudinale de la flèche (7) est effectuée pendant le déplacement de la flèche par des moyens détecteurs (57—61; 48, 56) mobiles avec la flèche; et en ce que lors du chargement d'un colis (1) de marchandises dans le conteneur (2), la flèche (7) est déplacée vers l'avant jusqu'à ce que le colis (1) de marchandises qu'elle porte vienne en contact avec une butée d'extrémité prévue dans le conteneur (2) ou avec le colis (1) de marchandises chargé immédiatement avant dans le conteneur; en ce que le déplacement de la flèche est poursuivi après que ledit contact a été établi jusqu'à ce que des moyens (60, 61, 64, 65) détecteurs de force portés par la flèche détectent une force d'une grandeur prédéterminée s'opposant au déplacement de la flèche, et en ce que le déplacement de la flèche est alors arrête, le colis de marchandises est posé dans le conteneur et la flèche est retirée.

2. Procédé selon la revendication 1, caractérisé en ce que dans la direction du déplacement de la flèche, la proximité entre les moyens transporteurs (9) et le colis (1) de marchandises est détectée à l'aide de moyens (58, 59) détecteurs de marchandises portés par la flèche (7) qui sont également utilisés pour détecteur si le colis (1) de marchandises a pris l'orientation prédéterminée par rapport aux moyens transporteurs (9).

3. Procédé selon la revendication 1 ou 2, caractérisé en ce que le déplacement de la flèche est normalement effectué à une première vitesse supérieure et en ce que le déplacement de la flèche est ralenti à une seconde vitesse inférieure un court instant avant que la flèche (7) atteigne la station de chargement ou l'emplacement pour poser le colis (1) de marchandises dans le conteneur (2).

4. Dispositif pour charger des colis (1) de marchandises d'une seule grandeur ou d'un petit nombre de grandeur uniforme dans un conteneur (2) ayant des dimensions prédéterminées dont une extrémité ouverte est disposée face à une station de chargement; ledit dispositif comprenant des moyens convoyeurs (5) disposés de façon à transporter des colis (1) de marchandises un à un jusqu'à la station de chargement; un châssis (8) de grue portant une longue flèche (7) et disposé sur le côté de la station de chargement opposé à celui où est disposé le conteneur (2), des moyens d'entraînement (24) pour déplacer la flèche (7) dans sa direction longitudinale; des moyens (9) transporteurs de marchandises portés par l'extrémité avant de la flèche (7); des moyens de levage (9) pour soulever et abaisser le colis (1) de marchandises porté par les moyens transporteurs; des moyens supports (22) montés dans le châssis (8) agencés de manière à porter la flèche (7) avec son extrémité avant en porté-à-faux au-dessus de la station de chargement et dans le conteneur (2), et des moyens détecteurs (57—61; 48, 56) mobiles avec la flèche (7), caractérisé en ce que les moyens détecteurs comprennent des moyens (57—61) détecteurs de marchandises portés par la flèche (7) et agencés pour détecter la position d'un colis (1) de marchandises par rapport aux moyens transporteurs (9), et des moyens (48, 56) détecteurs de position de la flèche montés mobiles avec la flèche et agencés de manière à interagir avec des moyens fixes (49—54, 55) de détection de position de la flèche pour indiquer la position de la flèche (7); et en ce que la flèche (7) est, en outre, munie d'une butée (64) pour un colis (1) de marchandises porté par les moyens transporteurs (9) et de moyens (65, 60, 61) détecteurs de force pour détecter une force prédéterminée agissant sur la butée (64) et s'opposant au déplacement de la fléche, ces moyens (65, 60, 61) détecteurs de force, lorsqu'ils détectent ladite force prédéterminée émettant un signal pour arrêter le déplacement de la fléche (7).

5. Dispositif selon la revendication 4, caractérisé en ce que des moyens (65) à ressort de compression sont interposés entre la butée (64) et la fléche (7); et en ce que les moyens (60, 61) détecteurs de force détectent la position de la butée (64) par rapport à la fléche (7) à la suite du déplacement de la butée (64) à l'encontre de la force de ressort (65) sous l'influence d'une force s'opposant au déplacement de la fléche.

6. Dispositif selon la revendication 4 ou 5, caractérisé en ce que la fléche (7) porte au moins deux moyens (58, 59) détecteurs de force montés à une courte distance à l'avant des moyens transporteurs (9) et latéralement espacés l'un de l'autre qui sont conçus, lorsque'un colis de marchandises est présent, pour transmettre chacun un signal à un appareil de commande (74) lequel est, à son tour, connecté aux moyens d'entraînement (24), aux moyens de levage (9) et à des moyens (67) de positionnement des marchandises portés par la fléche (7), et en ce que l'appareil de commande (74) est conçu de telle sorte que, lorsqu'un signal est émis par l'un ou l'autre des moyens (58, 59) détecteurs de marchandises, il arrête les moyens (24) d'entraînement de la fléche et actionne les moyens (67) de positionnement des marchandises et que, lorsque des signaux sont émis par les deux moyens (58, 59) détecteurs de marchandises, il actionne les moyens de levage (9) pour soulever le colis (1) de marchandises.

7. Dispositif selon l'une quelconque des revendications 4 à 6, caractérisé en ce que en ce que des moyens (52/48, 55/56) détecteurs de position de la fléche destinés au changement de vitesse sont montés à poste fixe sur le châssis (8) ou, respectivement, sur la fléche (7) dans des emplacements prédéterminés correspondant aux positions de la fléche à une courte distance de la station de chargement et d'emplacements de pose des marchandises prédéterminées dans le conteneur (2); et en ce que les moyens de détection de la fléche sont relié aux moyens d'entraînement (24) pour changer la vitesse des moyens d'entraînement d'une grande vitesse à une petite vitesse de la fléche.

FIG.1

0029817

1

FIG. 2

0029 817

FIG.3

FIG.4

FIG.5

FIG.6

5